(19) Europäisches Patentamt
European Patent Office
Office européen des brevets

(11) Veröffentlichungsnummer: **0 474 917 A2**

(12) # EUROPÄISCHE PATENTANMELDUNG

(21) Anmeldenummer: **90124991.2**

(51) Int. Cl.$^5$: **C08F 8/00**, C08F 8/32

(22) Anmeldetag: **20.12.90**

(30) Priorität: **29.08.90 DE 4027283**

(43) Veröffentlichungstag der Anmeldung:
**18.03.92 Patentblatt 92/12**

(84) Benannte Vertragsstaaten:
**BE DE FR GB IT NL SE**

(71) Anmelder: **HÜLS AKTIENGESELLSCHAFT**
**Patentabteilung / PB 15 - Postfach 13 20**
**W-4370 Marl 1(DE)**

(72) Erfinder: **Hahn, Karl, Dr.**
**Kardenstrasse 28**
**W-4370 Marl(DE)**
Erfinder: **Stützel, Bernhard, Dr.**
**Stargarder Strasse 32**
**W-4370 Marl(DE)**

(54) **Wässrige Kunststoffdispersion mit Polyolgruppen aufweisenden Kunststoffteilchen.**

(57) Die Erfindung ermöglicht die Herstellung von wäßrigen Kunststoffdispersionen mit Polyolgruppen aufweisenden Kunststoffteilchen. Die Grenzflächenhydrophilie der Kunststoffteilchen läßt sich in gewünschter Weise einstellen. Die Dispersionen enthalten in der wäßrigen Phase im wesentlichen keine gelösten makromolekularen Stoffe und sind sehr stabil. Die Dispersionen werden durch Emulsionspolymerisation und anschließende Modifizierung erhalten.

EP 0 474 917 A2

Die Erfindung liegt auf dem Gebiet der Herstellung und Verwendung von wäßrigen Kunststoffdispersionen. Die Dispersionen werden durch Emulsionspolymerisation von olefinisch ungesättigten Monomeren in Gegenwart von radikalischen Initiatoren hergestellt. Sie werden durch Zusatz geeigneter Zusatzstoffe und Hilfsmittel weiterverarbeitet, beispielsweise zu Dispersionsfarben, Dispersionsklebern, Streichmassen zur Papierbeschichtung, Beschichtungsmassen für Teppichrückenbeschichtungen und Compounds zur Herstellung von Latexschaum.

Die Kunststoffdispersionen müssen nicht nur bei der Herstellung sondern auch bei der Weiterverarbeitung stabil sein. Sie müssen insbesondere gegen Scherkräfte, Elektrolyte und Frost-Tau-Cyclen hinreichend stabil sein. Sie müssen mit den Zusatzstoffen, beispielsweise mit Pigmenten und Füllstoffen, verträglich sein. Sie müssen bei der Beschichtung von Substraten zu Wechselwirkungen mit diesen befähigt sein, so daß der Kunststoff gut auf dem Substrat haftet.

Im Zusammenhang mit diesen Anforderungen sind die Art und Menge der Hilfsmittel und die Zusammensetzung und Struktur des Kunststoffs in der Oberfläche der Kunststoffteilchen von Bedeutung. Es gibt unterschiedliche Wege zur Modifizierung der Oberfläche der Kunststoffteilchen. Ein Weg besteht in der Einführung von Hydroxylgruppen. Er ermöglicht die Einstellung der Grenzflächenhydrophilie. Als besonders wirksam erweist sich die Einführung von Polyolgruppen. Dies geschieht in bekannter Weise durch geeignete Maßnahmen während oder nach der Emulsionspolymerisation.

In Ullmanns Encyklopädie der technischen Chemie, 4. Auflage, Bd. 19, Seite 370, rechte Spalte, 1.3.4 Emulsionspolymerisation, wird die Herstellung von Poly(vinylacet)-Dispersionen durch Emulsionspolymerisation von Vinylacetat in Gegenwart eines radikalischen Initiatiors und von Poly(vinylalkohol) als Schutzkolloid beschrieben. Bei der Polymerisation wird ein Teil des Poly(vinylacetats) auf den Poly(vinylalkohol) aufgepfropft. Das Produkt ist somit nicht einheitlich. Es enthält offenbar Pfropfprodukt neben Poly-(vinylalkohol) und/oder Poly(vinylacetat). Letztere lassen sich nicht oder nur mit großem Aufwand vom Pfropfprodukt abtrennen. Uneinheitlichkeit von Kunststoffdispersionen wird für manche Anwendungen als nachteilig empfunden.

In der EP-PS 0 054 685 wird u. a. die Herstellung von wäßrigen Kunststoffdispersionen mit Glycolgruppen aufweisenden Kunststoffteilchen beschrieben. In einer ersten Verfahrensstufe wird eine wäßrige Kunststoffdispersion durch Emulsionspolymerisation eines Gemisches aus 85 Massen-% Vinylacetat und 15 Massen-% Glycidylmethacrylat in Gegenwart eines radikalischen Initiators erhalten. In einer zweiten Verfahrensstufe wird die Kunststoffdispersion mit Natronlauge behandelt. Dabei werden die aus der ersten Verfahrensstufe stammenden Epoxidgruppen unter Bildung von Glycolgruppen hydrolysiert (Beispiel 3 der EP-PS). Die erhaltenen Kunststoffdispersionen enthalten in der wäßrigen Phase im wesentlichen keine gelösten makromolekularen Stoffe. Die Glycolgruppen leisten nur einen geringen Beitrag zur Stabilität der Dispersionen.

Die Aufgabe der Erfindung besteht darin, wäßrige Kunststoffdispersionen mit Polyolgruppen aufweisenden Kunststoffteilchen bereitzustellen, welche die Nachteile des Standes der Technik überwinden.

Die Aufgabe wurde in überraschender Weise wie in den Patentansprüchen angegeben gelöst.

Der Gegenstand der Erfindung ist somit eine wäßrige Kunststoffdispersion mit Polyolgruppen aufweisenden Kunststoffteilchen, welche durch zwei Verfahrensstufen erhalten wird. In der Verfahrensstufe A wird eine wäßrige Kunststoffdispersion aus 0,5 bis 25, vorzugsweise 1 bis 14 Massen-% einer Verbindung der allgemeinen Formel

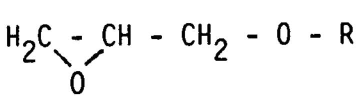

(I)

R:

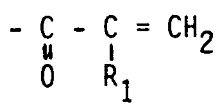

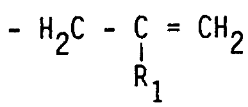

$R_1$: H, $C_1$- bis $C_4$-Alkyl

und 75 bis 99,5, vorzugsweise 86 bis 99 Massen-% anderen olefinisch ungesättigten Monomeren, bezogen auf die gesamten Monomeren, durch Emulsionspolymerisation in Gegenwart von radikalischen Initiatoren halten.

In der Verfahrensstufe B wird die erhaltene wäßrige Kunststoffdispersion mit einer eine primäre oder sekundäre Aminogruppe oder eine Carboxylgruppe aufweisenden, niedermolekularen, polyhydroxylierten, organischen Verbindung umgesetzt. Dabei reagieren die aus der Verfahrensstufe A stammenden Epoxidgruppen mit den primären oder sekundären Aminogruppen oder den Carboxylgruppen der polyhydroxylierten Verbindung. Diese weist wenigstens drei, vorzugsweise wenigstens vier Hydroxylgruppen auf. Unter einer niedermolekularen Verbindung wird eine Verbindung, welche ein Molekulargewicht von < 500 aufweist oder ein Gemisch von Verbindungen, welches ein gewichtsmittleres Molekulargewicht ($\overline{M}w$) von < 500 aufweist, verstanden.

Bevorzugte Verbindungen der allgemeinen Formel I sind Glycidyl(meth)acrylat und Allylglycidylether.

Die anderen olefinisch ungesättigten Monomere unterliegen keiner Beschränkung. Geeignet sind Vinylester von $C_2$- bis $C_{12}$-Alkancarbonsäuren, wie Vinylacetat, Vinylchlorid, 1,3-Diene, wie 1,3-Butadien und Isopren, vinylaromatische Verbindungen, wie Styrol, ($C_1$- bis $C_{18}$-Alkyl)(meth)acrylate, wie n-Butylacrylat, Di-($C_1$- bis $C_{12}$-Alkyl)maleinate und -fumarate, und (Meth)acrylnitril.

Geeignet sind auch funktionelle Comonomere, insbesondere ungesättigte Mono- und Dicarbonsäuren, wie (Meth)acrylsäure, Maleinsäure, Fumarsäure und Mono($C_1$- bis $C_{12}$-alkyl)maleinate und -fumarate, ungesättigte Carbonsäureamide, wie (Meth)acrylamid, und ungesättigte Sulfonsäuren. Ihre Menge ist in der Regel < 10 Massen-%, bezogen auf die gesamten Monomeren.

Die Emulsionspolymerisation gemäß Verfahrensstufe A ist grundsätzlich bekannt (siehe beispielsweise Houben-Weyl, Methoden der Organischen Chemie, 4. Auflage, Bd. 14/1 (1961), Seite 133 ff. und EP-PS 0 215 518).

Die Emulsionspolymerisation wird in Gegenwart von üblichen radikalischen Initiatoren durchgeführt. Geeignet sind beispielsweise Pexoxodisulfate, $H_2O_2$ und deren Kombinationen mit geeigneten Reduktionsmitteln.

Die Emulsionspolymerisation kann in Abwesenheit oder in Gegenwart von üblichen Emulgatoren durchgeführt werden.

Die Emulsionspolymerisation wird vorzugsweise in Gegenwart von üblichen Emulgatoren nach einem semikontinuierlichen Zulaufverfahren durchgeführt. Mit der Zugabe der Verbindung der allgemeinen Formel I wird vorzugsweise nach einem Umsatz von wenigstens 80 Massen-% der anderen olefinisch ungesättigten Monomeren, bezogen auf diese Monomeren, begonnen. In dieser Phase der Polymerisation ist darauf zu achten, daß möglichst keine neuen Teilchen gebildet werden.

Die Umsetzung gemäß Verfahrensstufe B wird vorzugsweise mit einer polyhydroxylierten Verbindung, welche von einem Pentit, einem Hexit oder einer Hexose abgeleitet ist, durchgeführt.

Geeignete polyhydroxylierte Verbindungen sind Hexonsäuren, wie beispielsweise Gluconsäure, Hexuronsäuren, wie beispielsweise Glucoronsäure, Hexosamine, d. h. 2-Amino-2-desoxyhexosen, wie beispielsweise der Aminozucker Glucosamin, 1-Amino-1-desoxy-hexite, wie beispielsweise Glucamin, sowie Bisglucamin (MG 345).

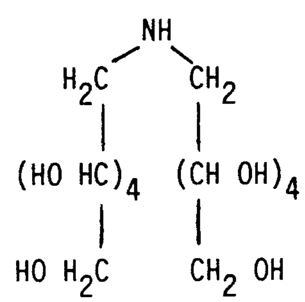

Die Umsetzung der polyhydroxylierten Verbindungen wird in der Regel bei pH > 7, vorzugsweise in Gegenwart von geeigneten Katalysatoren, durchgeführt. Geeignete Katalysatoren sind beispielsweise Tetranormalbutylammoniumiodid und Benzyltrimethylammoniumiodid.

Die Kunststoffdispersionen der Erfindung können Reinigungsoperationen unterworfen werden. Restmonomere können durch Wasserdampfdestillation entfernt werden. Durch Behandlung mit Ionenaustauschern, durch Dialyse oder durch Membranfiltration (Ultrafiltration) lassen sich wasserlösliche, niedermolekulare

Komponenten (weitgehend) abtrennen.

Die Dispersionen enthalten in der wäßrigen Phase im wesentlichen keine gelösten makromolekularen Stoffe. Sie weisen selbst bei Abwesenheit ionischer Gruppen eine hohe Stabilität, insbesondere gegen Scherkräfte, auf.

Gemäß der Lehre der Erfindung lassen sich wäßrige Kunststoffdispersionen mit hoher Oberflächenspannung herstellen. Sie eignen sich beispielsweise zur Herstellung von Streichmassen für die Papierbeschichtung, welche bei der Verarbeitung eine sehr geringe Neigung zum Schäumen zeigen.

Ionenarme Kunststoffdisperionen eignen sich zur Herstellung von Überzugsmitteln zum Korrosionsschutz von metallischen Oberflächen.

Es können auch Kunststoffdispersionen für spezielle Anwendungszwecke erhalten werden, welche sich beispielsweise zum Einsatz als Trägermaterial für medizinische Diagnosetests eignen (siehe beispielsweise Colloid Polym. Sci., Vol. 267 (1989), Seite 861 ff.).

Die Erfindung wird durch die folgenden Beispiele erläutert. Darin bedeuten Teile Massenteile und Prozent Massenprozent. Die nicht erfindungsgemäßen Vergleichsbeispiele werden mit großen Buchstaben bezeichnet.

Beispiele 1 und 1 a

Verfahrensstufe A

In einem Polymerisationsreaktor wurden 50 Teile einer wäßrigen Lösung, welche 0,002 Teile des Natriumsalzes der Ethylendiamintetraessigsäure und 0,038 Teile eines handelsüblichen, ca. 15 C-Atome aufweisenden Natriumparaffinsulfonats enthielten, vorgelegt. Bei 50 °C wurden unter Stickstoff als Schutzgas die nachfolgend angegebenen Zuläufe 1 bis 4 in der unten angegebenen Weise zugegeben.

Zulauf 1: 23,75 Teile Styrol

Zulauf 2: 12,5 Teile Wasser
0,22 Teile des oben angegebenen Paraffinsulfonats
0,1 Teile $Na_2S_2O_3$
0,07 Teile NaOH (100 %ig)

Zulauf 3: 12,5 Teile Wasser
0,2 Teile $Na_2S_2O_8$

Zulauf 4: 1,25 Teile Glycidylmethacrylat

10 % des Zulaufs 1 wurden zugegeben. Dann wurde mit den Zuläufen 2 und 3 begonnen (Zeitpunkt 0). Zum Zeitpunkt 15 min wurde der Zulauf 2 bis zum Zeipunkt 30 min unterbrochen. Zu diesem Zeitpunkt wurde mit dem Zulauf 1 begonnen und der Zulauf 2 wieder aufgenommen. Zum Zeitpunkt 4 h 30 min wurden der Zulauf 1 beendet und der Zulauf 4 begonnen. Zum Zeitpunkt 5 h wurden die Zuläufe 2 und 4 beendet. Zum Zeitpunkt 6 h wurde der Zulauf 3 beendet. Zum Zeitpunkt 7 h 30 min wurde der Reaktorinhalt abgekühlt und bei Erreichen von Raumtemperatur filtriert. Dabei wurde eine sehr geringe Menge Abscheidungen abgetrennt. Der Feststoffgehalt betrug 24,4 %. Der pH-Wert betrug 7,7.

Verfahrensstufe B

Die oben erhaltene Dispersion wurde mit D-Glucamin, dessen Menge mit der zur Herstellung der Dispersion eingesetzten Menge Glycidylmethacrylat äquimolar war, versetzt, d. h. zu 1 000 Teilen der oben erhaltenen Dispersion wurde eine Lösung von 15,7 Teilen D-Glucamin in 84,3 Teilen Wasser gegeben. Das Reaktionsgemisch wurde auf 70 °C erhitzt und mit 0,13 Teilen Tetranormalbutylammoniumiodid (1 %, bezogen auf die diesem Reaktionsansatz zugrundeliegende Menge Glycidylmethacrylat) versetzt. Nach 3 h war die Reaktion beendet.

Eine Portion der erhaltenen Dispersion wurde bei Raumtemperatur mit einem 1:1-Gemisch eines Anionenaustauschers und eines Kationenaustauschers behandelt. Mit Natronlauge wurde der pH-Wert 10,1 eingestellt. Die so gereinigte Dispersion wies eine deutlich höhere Viskosität auf als die ungereinigte Dispersion.

Die ungereinigte Dispersion und die gereinigte Dispersion (1 bzw. 1 a) wurden wie in der folgenden Tabelle angegeben charakterisiert.

Beispiele A und Aa

Eine gemäß Beispiel 1, Verfahrensstufe A, erhaltene Dispersion wurde bei Raumtemperatur mit dem

gleichen Volumen einer 0,1 n Natronlauge versetzt (Verfahrensstufe B'). Nach 24 h wurde eine Portion der erhaltenen Dispersion (A) wie im Beispiel 1 angegeben gereinigt.

Die ungereinigte Dispersion und die gereinigte Dispersion (A bzw. Aa) wurden wie in der folgenden Tabelle angegeben charakterisiert.

<u>Tabelle:</u> Wäßrige Kunststoffdispersionen mit Polyolgruppen aufweisenden Kunststoffteilchen

| Beispiel | Verfahrensstufe A Monomere, Teile *) | Verfahrensstufe B bzw. B' Umsetzung mit Aminopolyol bzw. Behandlung mit NaOH | Behandlung mit Ionenaustauschern | Feststoffgehalt % | pH | Oberflächenspannung mN/m | Stabilität gegen NaCl **) | Scherstabilität ***) min |
|---|---|---|---|---|---|---|---|---|
| 1 | S/GMA, 95/5 | Glucamin | - | 23,5 | 10,1 | 52,6 | + | ≥ 30 |
| 1 a | wie Bsp. 1 | Glucamin | + | 20,6 | 10,0 | 71,0 | + | ≥ 30 |
| A | wie Bsp. 1 | NaOH | - | 12 | > 12 | 52,4 | + | 6 |
| A a | wie Bsp. 1 | NaOH | + | 10 | 9,0 | 63,0 | + | 12 |
| 2 | S/BA/GMA, 47,5/47,5/5 | Glucamin | - | 22,8 | 9,4 | 41,1 | + | ca. 30 |
| 2 a | wie Bsp. 2 | Glucamin | + | 18,6 | 10,4 | 68,8 | - | ≥ 30 |
| 3 | S/GMA, 95/5 | Bisglucamin | - | 25,0 | 9,0 | 42,7 | + | ≥ 30 |

*) S = Styrol; GMA = Glycidylmethacrylat; BA = n-Butylacrylat

**) Die Dispersion wurde mit 10-prozentiger NaCl-Lösung im Volumenverhältnis 1:1 versetzt.

***) Die Dispersion wurde mit dem Dispergiergerät Ultra-Turrax, Janke & Kunkel, bei 20 000 Upm geprüft.

Beispiele 2 und 2 a

Verfahrensstufe A

In einem Polymerisationsreaktor wurden 60 Teile einer wäßrigen Lösung, welche 0,05 Teile des oben angegebenen Paraffinsulfonats und 0,8 Teile $H_2O_2$ (30 %ig in Wasser) enthielt, vorgelegt. Dazu wurden 0,00025 Teile $FeSO_4 \cdot 7H_2O$ als schwach saure wäßrige Lösung zugegeben. Bei 65 °C wurden unter Stickstoff die nachfolgend angegebenen Zuläufe 1 bis 4 in der unten angegebenen Weise zugegeben.

| | |
|---|---|
| Zulauf 1: | 11,875 Teile Styrol |
| | 11,875 Teile n-Butylacrylat |
| Zulauf 2: | 15 Teile Wasser |
| | 0,25 Teile des oben angegebenen Paraffinsulfonats |
| | 0,5 Teile Ascorbinsäure |
| Zulauf 3: | 5 Teile Wasser |
| | 0,2 Teile NaOH (100 %ig) |
| Zulauf 4: | 1,25 Teile Glycidylmethacrylat |

Zum Zeitpunkt 0 wurde mit den Zuläufen 1 bis 3 begonnen. Zum Zeitpunkt 4 h 30 min wurde der Zulauf 1 beendet und der Zulauf 4 begonnen. Zum Zeitpunkt 5 h wurde der Zulauf 4 beendet. Zum Zeitpunkt 6 h wurden die Zuläufe 2 und 3 beendet und eine Lösung von 0,1 Teilen des Paraffinsulfonats in 2 Teilen Wasser zugegeben. Zum Zeitpunkt 8 h wurde der Reaktorinhalt abgekühlt. Feststoffgehalt: 23,7 %; pH: 6,0.

Verfahrensstufe B

Die Verfahrensstufe B wurde analog Verfahrensstufe B des Beispiels 1 durchgeführt. Eine Portion der erhaltenen Dispersion wurde wie im Beispiel 1 angegeben gereinigt. Die ungereinigte Dispersion und die gereinigte Dispersion (2 bzw. 2 a) wurden wie in der Tabelle angegeben charakterisiert.

Beispiel 3

Verfahrensstufe A

Das Beispiel 2 wurde in der Weise abgewandelt, daß der Zulauf 1 aus 23,75 Teilen Styrol bestand. Feststoffgehalt: 24,2 %; pH: 4,2.

Verfahrensstufe B

Das Beispiel 2 wurde in der Weise abgewandelt, daß das D-Glucamin durch eine äquimolare Menge Bisglucamin ersetzt wurde. Die erhaltene, ungereinigte Dispersion wurde wie in der Tabelle angegeben charakterisiert.

**Patentansprüche**

**1.** Wäßrige Kunststoffdispersion mit Polyolgruppen aufweisenden Kunststoffteilchen, erhalten durch

A) Herstellung einer wäßrigen Kunststoffdispersion aus 0,5 bis 25 Massen-% einer Verbindung der allgemeinen Formel

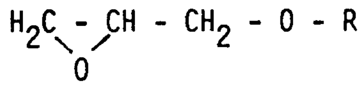 (I)

R: 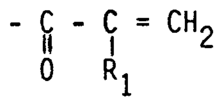

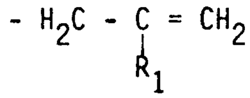

$R_1$: H, $C_1$- bis $C_4$-Alkyl

und 75 bis 99,5 Massen-% anderen olefinisch ungesättigten Monomeren, bezogen auf die gesamten Monomeren, durch Emulsionspolymerisation in Gegenwart von radikalischen Initiatoren und
B) Umsetzung der erhaltenen wäßrigen Kunststoffdispersion mit einer eine primäre oder sekundäre Aminogruppe oder eine Carboxylgruppe aufweisenden, niedermolekularen, polyhydroxylierten, organischen Verbindung.

**2.** Wäßrige Kunststoffdispersion nach Patentanspruch 1,
dadurch gekennzeichnet,
daß die Verbindung der allgemeinen Formel I Glycidyl(meth)acrylat oder Allylglycidylether ist.

**3.** Wäßrige Kunststoffdispersion nach Patentanspruch 1 oder 2,
dadurch gekennzeichnet,
daß die Emulsionspolymerisation in Gegenwart von üblichen Emulgatoren nach einem semikontinuierlichen Zulaufverfahren durchgeführt wird und die Verbindung der allgemeinen Formel I nach einem Umsatz von wenigstens 80 Massen-% der anderen olefinisch ungesättigten Monomeren, bezogen auf diese Monomeren, zugesetzt wird.

**4.** Wäßrige Kunststoffdispersion nach einem der Patentansprüche 1 bis 3,
dadurch gekennzeichnet,
daß die Umsetzung gemäß Verfahrensstufe B mit einer polyhydroxylierten Verbindung, welche von einem Pentit, einem Hexit oder einer Hexose abgeleitet ist, durchgeführt wird.